# EUROPÄISCHE PATENTSCHRIFT

(11) **EP 1 387 117 B1**
(45) Veröffentlichungstag und Bekanntmachung des Hinweises auf die Patenterteilung: **09.08.2006**
(21) Anmeldenummer: 03014695.5
(22) Anmeldetag: 27.06.2003
(51) Int. Cl.: F16K 31/06

(54) **Elektrisch betätigtes Ventil**
Electrically actuated valve
Soupape commandée électriquement

(30) Priorität: 30.07.2002 DE 10234609
(43) Veröffentlichungstag der Anmeldung: 04.02.2004
(73) Patentinhaber: ROBERT BOSCH GMBH, 70442 Stuttgart (DE)
(72) Erfinder: Hess, Juergen, 76534 Baden-Baden (DE); Reeb, Georg, 77815 Buehl Eisental (DE); Hein, Bernd, 72270 Baiersbronn/Schoenmuenzach (DE)

(56) Entgegenhaltungen:
- US-A- 5 676 345
- US-A- 5 809 978
- US-A1- 2002 096 655
- PATENT ABSTRACTS OF JAPAN Bd. 2002, Nr. 02, 2. April 2002 (2002-04-02) & JP 2001 280537 A (TOTO LTD), 10. Oktober 2001 (2001-10-10)

## Beschreibung

### Stand der Technik

Die Erfindung geht aus von einem Ventil zur Regelung eines strömenden Mediums, insbesondere einem Wasserventil für den Heizkreislauf in einem Kraftfahrzeug, nach dem Oberbegriff des Anspruchs 1.

Bei einem bekannten Ventil dieser Art (Bosch-Produktprogramm 1999/2000, "Magnetventile zur Wassermengenregelung"), das als Absperr- oder Taktventil oder als Umschalt- oder Taktventil mit Bypaß ausgeführt sein kann, weist das Ventilgehäuse in der Ausführung als Absperrventil einen Zu- und einen Ablaufstutzen und bei Ausführung als Umschaltventil einen Ablauf- und zwei Zulaufstutzen auf. Das Ventilgehäuse ist topfförmig ausgebildet, wobei die Topföffnung die Montageöffnung bildet, durch die hindurch eine Abstützhülse, ein die Ventilöffnung mit Ventilsitz aufweisender Ventilring, der auf der Abstützhülse aufliegt, und eine Klemmhülse, die den Ventilring auf der Abstützhülse festspannt eingesetzt sind. Eine die Topföffnung abschließende Dichtmembran ist mit ihrem Ringwulst in eine im Ventilgehäuse konzentrisch zur Topföffnung ausgeformte Ringnut eingelegt. Der als elektrische Hub- oder Linearmagnet ausgebildete Aktor ist in dem becherförmigen Steckergehäuse aufgenommen und an dem am ... Steckergehäuse außen zugänglich angeordneten Anschlussstecker angeschlossen. Das Steckergehäuse überdeckt mit seiner Becheröffnung die Montageöffnung des Ventilgehäuses und ist auf einem am Ventilgehäuse angeformten Ringflansch befestigt, wodurch zugleich der Ringwulst der Dichtmembran festgespannt wird. Eine vom Aktor axial verschiebbare Hubstange durchdringt die Dichtmembran und ragt in das Innere des Ventilgehäuses hinein. Die Hubstange trägt endseitig das mit dem Ventilsitz zum Sperren und Freigeben der Ventilöffnung zusammenwirkende Ventilglied. Die Hubstange wird von der Dichtmembran dicht umschlossen, so dass der Innenraum des Steckergehäuses gegen den wassergefüllten Innenraum des Ventilgehäuses abgeschlossen ist.

Aus der US 2002/0096655 A1 ist ein Spülventil für Luft bekannt, welches durch einen elektromagnetischen Aktuator betrieben wird. Die Spule des elektromagnetischen Aktuators dieses Ventils ist dabei in ein umspritztes Plastikgehäuse des Ventils integriert. Zusätzlich zu der Spule des Aktuators kann bei dem Ventil der US 2002/0096655 A1 auch eine Kalibrierungsvorrichtung sowie eine elektrische Anschlusskomponente in dem umspritzten Kunststoffgehäuse integriert sein.

### Vorteile der Erfindung

Das erfindungsgemäße Ventil mit den Merkmalen des Anspruchs 1 hat den Vorteil, daß das komplette Ventil aus nur wenigen einzelnen Komponenten zusammengesetzt ist und sich leicht montieren läßt, wobei die Funktionsfähigkeit des Ventils bereits durch Prüfung und Justierung der Ventilpatrone sichergestellt ist. Die Ventilpatrone läßt sich einheitlich in allen Ventiltypen verwenden, die sich durch spezielle Anforderungen der Kunden an das äußere technische Design des Ventils, z.B. durch eine vorgeschriebene Anordnung und Ausrichtung der Gehäusestutzen und/oder eine vorgeschriebene Plazierung des Anschlußsteckers am Steckergehäuse, ergeben, so daß die Ventilpatrone in einer sehr großen Stückzahl gefertigt werden kann, was die Herstellungskosten deutlich sinken läßt. Die kundenspezifischen Abweichungen werden im Ventil- und Steckergehäuse berücksichtigt, die damit zwar in wesentlich kleinerer Stückzahl hergestellt werden, aber als einfache Spritzteile kostengünstig gefertigt werden können. Insgesamt lassen sich durch die erfindungsgemäße Modulbauweise des Ventils auch bei einer erheblichen Anzahl von unterschiedlichen, kundenspezifischen Ventiltypen die Fertigungskosten deutlich senken.

Durch die in den weiten Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung bilden Ventilgehäuse und Steckergehäuse ein einheitliches Gehäusemodul, in das die Ventilpatrone eingesetzt und darin befestigt ist. Die Anpassung an kundenspezifische Abweichungen hinsichtlich des elektrischen und hydraulischen Anschlußbildes erfolgt in dem Gehäusemodul, während die universell eingesetzte Ventilpatrone mit allen Gehäusemodulvarianten zusammengebaut wird.

Gemäß einer bevorzugten Ausführungsform der Erfindung sind Ventilgehäuse, Steckergehäuse und Ventilpatrone separat vorgefertigte Module, die zu einer Kompletteinheit montiert werden, indem die Ventilpatrone in das Gehäuse eingesetzt und das Steckergehäuse auf das Ventilgehäuse aufgesetzt und an diesem befestigt wird. Bei drei statt nur zwei vorhandenen Modulen für das komplette Ventil können für kundenspezifische Forderungen größere Stückzahlen von speziell angepaßten Steckergehäusen und speziell angepaßten Ventilgehäusen vorgehalten werden, da Kundenforderungen hinsichtlich nur des elektrischen Anschlußbildes oder nur des hydraulischen Anschlußbildes sehr viel häufiger gleich sind.

Bei der letztgenannten Ausführungsform der Erfindung weisen vorteilhaft die Module Steckergehäuse und Ventilgehäuse an ihren einander zugekehrten Gehäuserändern miteinander verrastbare Rastelemente auf, die vorzugsweise so ausgebildet sind, daß bei gegenseitiger Verrastung die Ventilpatrone zwischen Ventilgehäuse und Steckergehäuse axial verspannt ist. Infolge dieser Rastelemente ist die Montage denkbar einfach und ist auf drei Montageschritte reduziert, nämlich das Einsetzen der Ventilpatrone in das Ventilgehäuse, das Aufsetzen des Steckergehäuses auf den aus dem Ventilgehäuse herausragenden Teil der Ventilpatrone und das Zusammendrücken der beiden Gehäuse bis die Rastelemente durch Ineinandergreifen die mechanische Verbindung zwischen den beiden Gehäusen herstellen. Durch die dabei erzielte, axiale Verspannung der Ventilpatrone zwischen den beiden Gehäusen wird eine zuverlässige Kontaktierung zwischen den Anschlußkontakten auf der Ventilpatrone und den mit dem Anschlußstecker verbundenen Gegenkontakten im Steckergehäuse hergestellt.

Gemäß einer bevorzugten Ausführungsform der Erfindung weist die Ventilpatrone außenliegende Anschlußkontakte für den Aktor und das Steckergehäuse im Innern angeordnete Gegenkontakte auf, die mit dem Anschlußstecker elektrisch leitend verbunden sind. Die Gegenkontakte sind so plaziert, daß sie am Ende des Aufschiebewegs des Steckergehäuses die Anschlußkontakte auf der Ventilpatrone kontaktieren. Durch diese konstruktive Maßnahmen wird die elektrische Verbindung zwischen Anschlußstecker am Steckergehäuse und dem in der Ventilpatrone integrierten Aktor beim Aufsetzen des Steckergehäuses auf das Ventilgehäuse und durch die Befestigung des Steckergehäuses am Ventilgehäuse automatisch hergestellt und bedarf keines zusätzlichen Montagevorgangs. Nach vollendeter Montage ist lediglich eine Kontrolle von Ventilfunktion und Dichtheit vorzunehmen.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines als Absperrventil ausgeführten Wasserventils für den Heizkreislauf in einem Kraftfahrzeug,
- Fig. 2: eine perspektivische Ansicht des Wasserventils in Fig. 1 in Explosionsdarstellung,
- Fig. 3: ausschnittweise einen Längsschnitt eines als Umschaltventil ausgeführten Wasserventils.

### Beschreibung der Ausführungsbeispiele

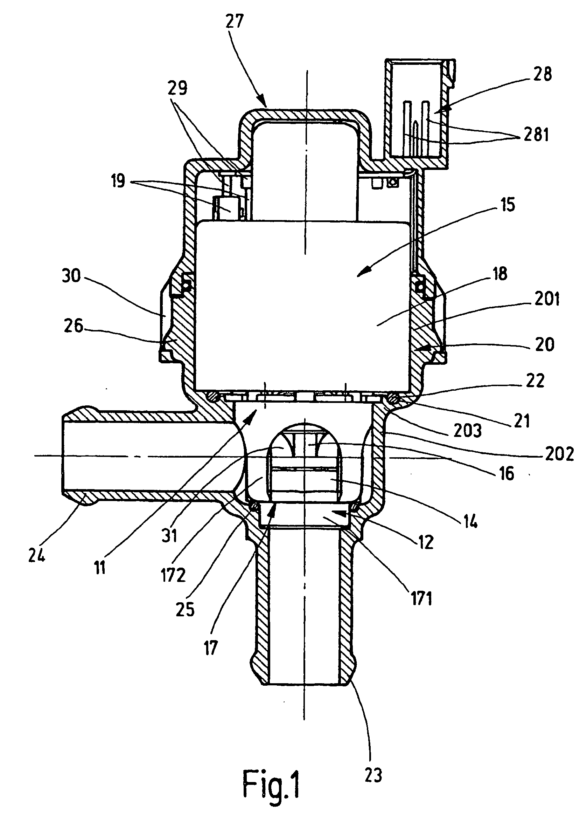

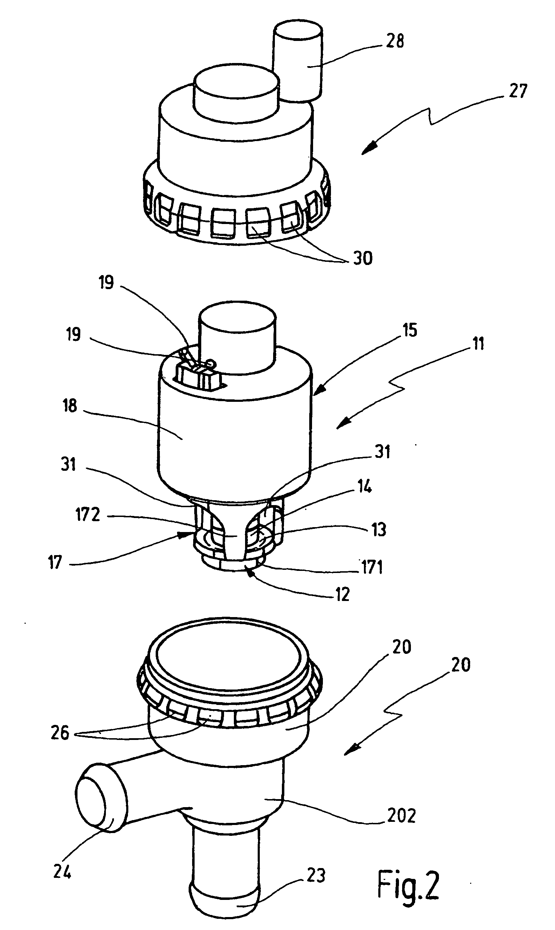

Das in Fig. 1 im Längsschnitt dargestellte Wasserventil für den Kühl- und Heizkreislauf in einem Kraftfahrzeug als Ausführungsbeispiel für ein allgemeines Ventil zur Regelung eines strömenden Mediums besteht aus drei Komponenten, die in der Explosionsdarstellung in Fig. 2 voneinander getrennt dargestellt sind und in einer einfachen und schnellen Montage zu dem Wasserventil komplettiert werden können. Wesentliche Komponente ist eine Ventilpatrone 11, die ein funktionsprüfbares Modul darstellt und in der die für die Funktion des hier als Absperr- oder Taktventil ausgebildeten Wasserventils wesentlichen Bauteile zusammengefaßt sind. Wie Fig. 1 und 2 zeigen, umfaßt die Ventilpatrone 11 einen Ventilkörper 12, der eine Ventilöffnung 13 aufweist, ein Ventilglied 14 zum Freigeben oder Schließen der Ventilöffnung 13 und einen elektrischen Aktor 15, der beispielsweise ein als Hub- oder Linearmagnet arbeitender Elektromagnet ist und in bekannter Weise eine Magnetspule, einen festen Eisenkern und einen dazu axial angeordneten, beweglichen Eisenkern, den sog. Magnetanker, die beide im Innern der Magnetspule aufgenommen sind, sowie einen die Magnetspule außen umschließenden Magnettopf 18 aufweist. Wie hier weiter nicht dargestellt ist, ist der Magnetanker fest mit einer Hubstange 16 verbunden, die das Ventilglied 14 trägt, so daß je nach Verschiebeposition des Magnetankers das Ventilglied 14 auf einen die Ventilöffnung 13 umgebenden Ventilsitz aufgepreßt oder freigegeben ist. Im letzten Fall kann das Ventilglied 14 ähnlich einem Rückschlagventil unter der Wirkung des strömenden Wassers von dem Ventilsitz abgehoben und bei umgekehrter Strömungsrichtung auf den Ventilsitz aufgepreßt, so daß eine Rückströmung zuverlässig unterbunden ist. Anternativ kann das Wasserventil auch ohne Rückschlagfunktion ansgeführt werden, so daß das Ventilglied 14 in herkömmlicher Weise durch den Aktor 15 zum Schließen der Ventilöffnung 13 auf den Ventilsitz aufgesetzt und zum Öffnen der Ventilöffnung 13 vom Ventilsitz abgehoben wird. Der Ventilkörper 12 ist Teil eines Ventilkorbs 17 und bildet dessen Korbboden 171. Die Korbwand 172 ist mit Durchströmöffnungen 31 versehen. Der Ventilkorb 17 ist mit seinem Korbrand am Aktor 15 festgelegt und wird in der hier beschriebenen Ausführung als Elektromagnet von dem Magnettopf 18 übergriffen. Die elektrischen Anschlüsse für den Aktor 15, hier für die Magnetspule des Elektromagneten, sind als Anschlußkontakte 19 durch eine Aussparung 32 in dem Magnettopf 18 herausgeführt.

Die zweite Komponente des Wasserventils ist ein Ventilgehäuse 20, das topfartig mit zwei axial hintereinanderliegenden, im Innendurchmesser unterschiedlichen Gehäuseabschnitten 201 und 202 ausgebildet ist. Der durchmessergrößere Gehäuseabschnitt 201 bildet einen Aufnahmetopf für die Ventilpatrone 11 im Bereich des Aktors 15, und der Gehäuseabschnitt 202 mit kleinerem Durchmesser bildet eine Aufnahmekammer für die Ventilpatrone 11 im Bereich des Ventilkorbs 17. Die zwischen den beiden Gehäuseabschnitten 201 und 202 sich ausbildende, radiale Ringschulter 203 bildet eine Abstützschulter für die Ventilpatrone 11. In die Ringschulter 203 ist eine Ringnut 21 eingearbeitet, in der ein Dichtungsring 22 einliegt. Das Ventilgehäuse 20 weist einen Zulaufstutzen 23, der axial zur Gehäuseachse angeordnet ist, und einen Ablaufstutzen 24 auf, der radial zur Gehäuseachse angeordnet ist. Je nach Kundenwunsch kann die Anordnung von Zu- und Ablaufstutzen 23, 24 anders vorgenommen sein. In allen Fällen münden Zulaufstutzen 23 und Ablaufstutzen 24 in dem Gehäuseabschnitt 202 mit dem kleineren lichten Durchmesser, in dem der Ventilkorb 17 so eingesetzt ist, daß die Ventilöffnung 13 im Ventilkörper 12 zwischen den Mündungen von Zulaufstutzen 23 und Ablaufstutzen 24 liegt und der Ventilkörper 12 die Mündungen von Zulaufstutzen 23 und Ablaufstutzen 24 voneinander trennt. Zwischen dem Ventilkörper 12 und der Gehäuseinnenwand des Ventilgehäuses 20 ist ein Dichtungsring 25 angeordnet. Das Ventilgehäuse 20 trägt am Öffnungsrand des Gehäuseabschnitts 201 mit dem größeren lichten Durchmesser über den Umfang angeordnete Rastnasen 26, die in einer bevorzugten Ausführung äquidistant angeordnet werden.

Die dritte Komponente des Wasserventils ist ein kappenförmiges Steckergehäuse 27, das einen Anschlußstecker 28 für die Bestromung des elektrischen Aktors 15 trägt. Die Steckerstifte 281 des Anschlußsteckers 28 sind elektrisch leitend mit im Innern des Steckergehäuses 27 angeordneten Gegenkontakten 29 verbunden. Die Anordnung der Gegenkontakte 29 im Steckergehäuse 27 ist so getroffen, daß beim Aufschieben des Steckergehäuses 27 auf die Ventilpatrone 11 die Gegenkontakte 29 sich am Ende des Aufschiebewegs auf die Anschlußkontakte 19 an der Ventilpatrone 11 aufsetzen. Der Anschlußstecker 28 ist in dem in Fig. 1 gezeigten Beispiel des Wasserventils axial am Rand des Steckergehäuses 27 angeordnet. Je nach Kundenwunsch wird auch eine andere Plazierung des Anschlußsteckers 28 vorgenommen. In allen Fällen bleiben aber die Steckerstifte 281 des Anschlußsteckers 28 mit den im Innern des Steckergehäuses 27 räumlich unverändert plazierten Gegenkontakten 29 elektrisch leitend verbunden. Das kappenförmige Steckergehäuse 27 trägt an seinem dem Ventilgehäuse 20 zugekehrten Kappenrand eine Vielzahl von über den Umfang angeordnete Rastaussparungen 30, die mit den Rastnasen 26 am Ventilgehäuse 20 zusammenwirken und entsprechende Abmessungen und gleiche Abstände voneinander aufweisen. Auch hier werden vorzugsweise die Rastnase 26 äquidistant angeordnet, wobei ihr gegenseitiger Abstand dem der Rastaussparungen 30 entspricht. Die von den Rastnasen 26 und den Rastaussparungen 30 gebildeten Rastelemente sind so aufeinander abgestimmt, daß sie beim Aufpressen des Steckergehäuses 27 auf das Ventilgehäuse 20 ineinander verrasten und dabei die beiden Gehäuse miteinander axial verspannen und so eine zuverlässige Rastverbindung herstellen.

Die Montage des Wasserventils erfolgt in der Weise, daß in ein nach Kundenanforderung ausgewähltes Ventilgehäuse 20 die Ventilpatrone 11 in der in Fig. 1 zu sehenden Weise eingesetzt wird, wobei zuvor auf den Außenumfang des Ventilkörpers 12 die ringförmige Dichtung 25 aufgeschoben und in die Ringnut 21 in der Ringschulter 203 des Ventilgehäuses 20 der Dichtungsring 22 eingelegt worden ist. Dann wird das nach Kundenanforderung ausgewählte Steckergehäuse 27 über den aus dem Ventilgehäuse 20 herausragenden Teil der Ventilpatrone 11 gestülpt, bis die Rastaussparungen 30 teilweise die Rastnasen 26 übergreifen. Steckergehäuse 27 und Ventilgehäuse 20 werden nun soweit axial zusammengedrückt, bis die Rastnasen 26 vollständig in die Rastaussparungen 30 einschnappen. Durch dieses Zusammendrücken von Steckergehäuse 27 und Ventilgehäuse 20 wird einerseits die Ventilpatrone 11 auf den Dichtungsring 22 und die Dichtung 25 aufgepreßt und werden andererseits die Gegenkontakte 29 auf die Anschlußkontakte 19 aufgepreßt, so daß eine gute Kontaktierung hergestellt ist. Durch die axiale Verspannung der Ventilpatrone 11 wird auch eine zuverlässige Verrastung der beiden Gehäusen 27 , 20 sichergestellt.

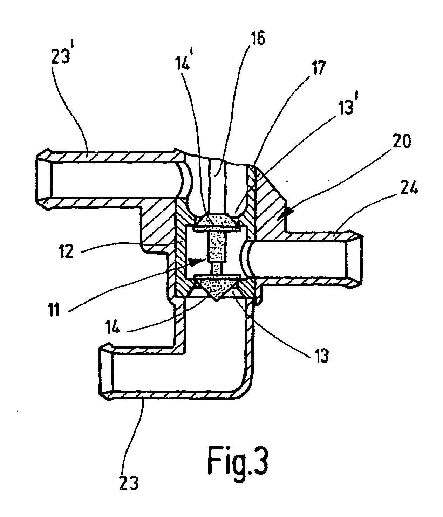

Das in Fig. 3 ausschnittweise im Längsschnitt dargestellte Wasserventil ist in gleicher Weise aus den drei Komponenten Ventilgehäuse 20, Ventilpatrone 11 und Steckergehäuse 27 zusammengesetzt, von denen in Fig. 3 lediglich das Ventilgehäuse 20 und die Ventilpatrone 11 jeweils ausschnittweise im Längsschnitt dargestellt sind. Das Wasserventil ist hier als Umschaltventil ausgebildet, wobei das Ventilgehäuse 20 zwei Zulaufstutzen 23 und 23' und einen Ablaufstutzen 24 aufweist. Entsprechend besitzt der Ventilkörper 12 in der Ventilpatrone 11 zwei Ventilöffnungen 13, 13', von denen die Ventilöffnung 13 zwischen dem Zulaufstutzen 23 und dem Ablaufstutzen 24 und die Ventilöffnung 13' zwischen dem Zulaufstutzen 23' und dem Ablaufstutzen 24 plaziert ist. Bei entsprechend ausgebildetem Ventilkörper und Ventilglied können auch zwei Ablaufstutzen und ein Zulaufstutzen realisiert werden. Der Ventilkörper 12 ist wiederum einstückig am Ventilkorb 17 ausgebildet, der seinerseits wieder am Aktor 15 festgelegt ist. Die Hubstange 16 des Aktors 15 trägt jetzt zwei Ventilglieder 14 und 14', von denen jeweils eines die zugeordnete Ventilöffnung 13 bzw. 13' steuert. In dem in Fig. 3 dargestellten Beispiel ist das Umschaltventil stromlos offen, und Wasser strömt vom Zulaufstutzen 23 über das sich nach Art eines Rückschlagventils öffnende Ventilglied 14 in den Ablaufstutzen 24. Wird der Aktor 15 bestromt, so wird das Ventilglied 13' geöffnet und das Ventilglied 13 an seiner Öffnungsbewegung gehindert, so daß die Ventilöffnung 13' freigegeben und die Ventilöffnung 13 geschlossen ist. Wasser strömt nunmehr von dem Zulaufstutzen 23' zum Ablaufstutzen 24.

Die Erfindung ist nicht auf das beschriebene Ausführungsbeispiel beschränkt. So können Steckergehäuse 27 und Ventilgehäuse 20 ein einheitliches Gehäusemodul bilden, in das die Ventilpatrone 11 als separates Montagemodul eingesetzt und darin befestigt wird. In diesem Fall müssen die Anschlußkontakte 19 für den Aktor 15 verlegt werden, so daß sie beim Einsetzen des Aktors 15 in das Gehäusemodul wiederum automatisch kontaktiert und damit mit dem am Gehäusemodul vorhandenen Anschlußstecker elektrisch verbunden werden. Bei einer solchen Ausgestaltung der Erfindung braucht nur noch das Gehäusemodul an Kundenwünsche angepaßt zu werden, und zwar sowohl bezüglich des elektrischen Anschlußbilds, als auch bezüglich der hydraulischen Anschlußforderungen.

## Patentansprüche

1. Ventil zur Regelung eines strömenden Mediums, insbesondere Wasserventil für den Kühl- und Heizkreislauf in einem Kraftfahrzeug, mit einem Ventilgehäuse (20), das mindestens einen Zulaufstutzen (23) und mindestens einen Ablaufstutzen (24) aufweist, mit einem in dem Ventilgehäuse (20) einlegbaren Ventilkörper (12), der mindestens eine zwischen einem Zu- und Ablaufstutzen (23, 24) liegende Ventilöffnung (13) aufweist, mit mindestens einem die zugeordnete Ventilöffnung (13) freigebenden oder verschließenden Ventilglied (14), mit einem das Ventilglied (14) betätigenden, elektrischen, insbesondere elektromagnetischen Aktor (15) und mit einem mit dem Aktor (15) elektrisch verbindbaren Steckergehäuse (27), **dadurch gekennzeichnet, daß** Ventilkörper (12), Ventilglied (14) und Aktor (15) zu einer ein funktionsprüfbares Modul darstellenden Ventilpatrone (11) zusammengefaßt sind.

2. Ventil nach Anspruch 1, **dadurch gekennzeichnet, daß** das Ventilgehäuse (20) und das Steckergehäuse (27) ein einheitliches Gehäusemodul bilden und daß das Gehäusemodul und die Ventilpatrone (11) zu einer Kompletteinheit zusammengesetzt sind, indem die Ventilpatrone (11) in das Gehäusemodul eingesetzt und darin befestigt ist.

3. Ventil nach Anspruch 1, **dadurch gekennzeichnet, daß** Ventilgehäuse (20), Steckergehäuse (27) und Ventilpatrone (11) separate Module sind, die zu einer Kompletteinheit zusammengesetzt sind, indem die Ventilpatrone (11) in das Ventilgehäuse (20) eingesetzt und das Steckergehäuse (27) auf das Ventilgehäuse (20) aufgesetzt und mit diesem fest verbunden ist.

4. Ventil nach Anspruch 3, **dadurch gekennzeichnet, daß** Steckergehäuse (27) und Ventilgehäuse (20) an ihren einander zugekehrten Gehäuserändern miteinander verrastbare Rastelemente (26, 30) aufweisen.

5. Ventil nach Anspruch 4, **dadurch gekennzeichnet, daß** die Rastelemente (26, 30) so ausgebildet sind, daß bei gegenseitiger Verrastung die Ventilpatrone (11) zwischen Ventilgehäuse (20) und Steckergehäuse (27) axial verspannt ist.

6. Ventil nach Anspruch 4 oder 5, **dadurch gekennzeichnet, daß** die Rastelemente eine Vielzahl von im Steckergehäuse (27) eingebrachte Rastaussparungen (30) und eine Vielzahl von am Ventilgehäuse (20) angeordneten Rastnasen (26) aufweisen, die in die Rastaussparungen (30) eingreifen.

7. Ventil nach einem der Ansprüche 1 - 6, **dadurch gekennzeichnet, daß** die Ventilpatrone (11) außenliegende Anschlußkontakte (19) für den Aktor (15) und das Steckergehäuse (27) innenliegende, mit einem Anschlußstecker (28) elektrisch leitend verbundene Gegenkontakte (29) aufweist, die die Anschlußkontakte (19) an der Ventilpatrone (11) kontaktieren.

8. Ventil nach einem der Ansprüche 1 - 7, **dadurch gekennzeichnet, daß** der Ventilkörper (12) am Aktor (15) festgelegt ist.

9. Ventil nach Anspruch 8, **dadurch gekennzeichnet, daß** der Ventilkörper (12) den Korbboden (171) eines Durchströmungsöffnungen (31) in der Korbwand (172) aufweisenden Ventilkorbs (17) bildet, der an seinem ventilkörperfernen Korbrand am Aktor (15) festgelegt ist.

10. Ventil nach Anspruch 9, **dadurch gekennzeichnet, daß** der Aktor (15) als Elektromagnet mit einem außenliegenden Magnettopf (18) ausgebildet ist, der mindestens eine Aussparung (32) für die Anschlußkontakte (19) trägt und zur Festlegung des Ventilkörpers (12) am Aktor (15) den Korbrand des Ventilkorbs (17) übergreift.

11. Ventil nach einem der Ansprüche 8 - 10, **dadurch gekennzeichnet, daß** das Ventilgehäuse (20) zwei im Innendurchmesser gestufte Gehäuseabschnitte (201, 202) mit einer am Übergang der Gehäuseabschnitte (201, 202) sich ergebenden, radialen Ringschulter (203) aufweist und daß die Ventilpatrone (11) mit einem ringförmigen Stirnabschnitt unter Zwischenlage eines Dichtungsrings (22) an der Ringschulter (203) angepreßt ist.

12. Vorrichtung nach einem der Ansprüche 9 - 11, **dadurch gekennzeichnet, daß** die Ventilpatrone (11) im Bereich ihres Ventilkorbs (17) von dem den kleineren Innendurchmesser aufweisenden Gehäuseabschnitt (202) des Ventilgehäuses (20) aufgenommen ist und daß zwischen dem Ventilkörper (12) und der Gehäusewand des Ventilgehäuses (11) eine ringförmige Dichtung (25) angeordnet ist.

13. Vorrichtung nach Anspruch 7 und Anspruch 11 oder 12, **dadurch gekennzeichnet, daß** der axiale Anpreßdruck der Ventilpatrone (11) vom Steckergehäuse (27) über die Gegenkontakte (29) und die Anschlußkontakte (19) aufgebracht ist.

## Claims

1. Valve for regulating a flowing medium, in particular water valve for the cooling and heating circuit in a motor vehicle, with a valve housing (20) which has at least one inflow nipple (23) and at least one outflow nipple (24), with a valve body (12) which is capable of being inserted in the valve housing (20) and has at least one valve port (13) lying between an inflow and an outflow nipple (23, 24), with at least one valve member (14) opening or closing the assigned valve port (13), with an electrical, in particular electromagnetic actuator (15) actuating the valve member (14), and with a plug housing (27) connected electrically to the actuator (15), **characterized in that** the valve body (12), valve member (14) and actuator (15) are combined into a valve cartridge (11) constituting a functionally testable module.

2. Valve according to Claim 1, **characterized in that** the valve housing (20) and the plug housing (27) form a unitary housing module, and **in that** the housing module and the valve cartridge (11) are assembled into a complete unit by the valve cartridge (11) being inserted into the housing module and being fastened in the latter.

3. Valve according to Claim 1, **characterized in that** the valve housing (20), plug housing (27) and valve cartridge (11) are separate modules which are assembled into a complete unit by the valve cartridge (11) being inserted into the valve housing (20) and by the plug housing (27) being placed on the valve housing (20) and being fixedly connected to the latter.

4. Valve according to Claim 3, **characterized in that** the plug housing (27) and valve housing (20) have, at their housing edges facing one another, latching elements (26, 30) capable of being latched with one another.

5. Valve according to Claim 4, **characterized in that** the latching elements (26, 30) are designed such that, in the case of mutual latching, the valve cartridge (11) is braced axially between the valve housing (20) and plug housing (27).

6. Valve according to Claim 4 or 5, **characterized in that** the latching elements have a multiplicity of latching clearances (30) introduced in the plug housing (27) and a multiplicity of latching noses (26) which are arranged on the valve housing (20) and engage into the latching clearances (30).

7. Valve according to one of Claims 1 - 6, **characterized in that** the valve cartridge (11) has external connecting contacts (19) for the actuator (15) and the plug housing (27) has internal mating contacts (29) which are connected electrically conductively to a connecting plug (28) and contact the connecting contacts (19) on the valve cartridge (11).

8. Valve according to one of Claims 1 - 7, **characterized in that** the valve body (12) is secured to the actuator (15).

9. Valve according to Claim 8, **characterized in that** the valve body (12) forms the cage bottom (171) of a valve cage (17) which has throughflow ports (31) in the cage wall (172) and which is secured, at its cage edge remote from the valve body, to the actuator (15).

10. Valve according to Claim 9, **characterized in that** the actuator (15) is designed as an electromagnet with an external magnet pot (18) which carries at least one clearance (32) for the connecting contacts (19) and which engages over the cage edge of the valve cage (17) in order to secure the valve body (12) to the actuator (15).

11. Valve according to one of Claims 8 - 10, **characterized in that** the valve housing (20) has two housing portions (201, 202) of stepped inside diameter, with a radial annular shoulder (203) occurring at the transition of the housing portions (201, 202), and **in that** the valve cartridge (11) is pressed with an annular end portion against the annular shoulder (203), with a sealing ring (22) being interposed.

12. Device according to one of Claims 9 - 11, **characterized in that** the valve cartridge (11) is received, in the region of its valve cage (17), by the housing portion (202) of smaller inside diameter of the valve housing (20), and **in that** an annular seal (25) is arranged between the valve body (12) and the housing wall of the valve housing (11).

13. Device according to Claim 7 and Claim 11 or 12, **characterized in that** the axial pressing force of the valve cartridge (11) is applied by the plug housing (27) via the mating contacts (29) and the connecting contacts (19).

## Revendications

1. Soupape de régulation d'un fluide qui circule, notamment d'une soupape d'eau pour un circuit de refroidissement et de chauffage d'un véhicule automobile, comportant un boîtier (20) muni d'au moins un ajutage d'entrée (23) et d'au moins un ajutage de sortie (24) ainsi qu'un corps de soupape (12) placé dans le boîtier (20), ayant au moins un orifice de soupape (13) entre l'ajutage d'entrée et l'ajutage de sortie (23, 24), au moins un organe de soupape (14) qui libère ou ferme l'orifice de soupape (13) correspondant, un actionneur électrique (15), notamment électromagnétique, commandant l'organe de soupape (14) et un boîtier de connexion (27) relié électriquement à l'actionneur (15),
**caractérisée en ce que**
le corps de soupape (12), l'organe de soupape (14) et l'actionneur (15) sont regroupés en une cartouche de soupape (11) constituant un module dont on peut contrôler le fonctionnement.

2. Soupape selon la revendication 1,
**caractérisée en ce que**
le boîtier de soupape (20) et le boîtier de connexion (27) constituent un module de boîtier unique et le module de boîtier et la cartouche de soupape (11) sont réunis en une unité complète, la cartouche de soupape (11) étant placée et fixée dans le module de boîtier.

3. Soupape selon la revendication 1,
**caractérisée en ce que**
le boîtier de soupape (20), le boîtier de connexion (27) et la cartouche de soupape (11) constituent des modules distincts assemblés en une unité complète et la cartouche de soupape (11) est placée dans le boîtier de soupape (20) et le boîtier de connexion (27) est appliqué et relié solidairement au boîtier de soupape (20).

4. Soupape selon la revendication 3,
**caractérisée en ce que**
le boîtier de connexion (27) et le boîtier de soupape (20) ont, au niveau des bords en regard, des éléments d'enclipsage (26, 30) correspondants.

5. Soupape selon la revendication 4,
**caractérisée en ce que**
les éléments d'enclipsage (26, 30) sont réalisés de façon à serrer axialement la cartouche de soupape (11) entre le boîtier de soupape (20) et le boîtier de connexion (27) lorsque ceux-ci sont enclipsés l'un dans l'autre.

6. Soupape selon la revendication 4 ou 5,
**caractérisée en ce que**
les éléments d'enclipsage comportent plusieurs cavités d'enclipsage (30) réalisées dans le boîtier de connexion (27) et plusieurs becs d'enclipsage (26) prévus sur le boîtier de soupape (20), ces becs pénétrant dans les cavités d'enclipsage (30).

7. Soupape selon l'une des revendications 1 à 6,
**caractérisée en ce que**
les contacts de raccordement (19) situés à l'extérieur de la cartouche de soupape (11) pour l'actionneur (15) et le boîtier de connexion (27) comportent des contre-contacts (29) intérieurs, reliés électriquement à un connecteur (28), ces contre-contacts touchant les contacts de raccordement (19) de la cartouche de soupape (11).

8. Soupape selon l'une des revendications 1 à 7,
**caractérisée en ce que**
le corps de soupape (12) est fixé à l'actionneur (15).

9. Soupape selon la revendications 8,
**caractérisée en ce que**
le corps de soupape (12) forme le fond (171) d'une cage (17) munie d'orifices de passage (31) dans sa paroi (172), cette cage étant fixée à l'actionneur (15) par son bord éloigné de la soupape.

10. Soupape selon la revendications 9,
**caractérisée en ce que**
l'actionneur (15) est un électroaimant avec une tête magnétique (18) située à l'extérieur et ayant au moins un évidement (32) pour les contacts de branchement (19) et chevauchant le bord de la cage de soupape (17) pour fixer le corps de soupape (12) à l'actionneur (15).

11. Soupape selon l'une des revendications 8 à 10,
**caractérisée en ce que**
le boîtier de soupape (20) comporte deux segments de boîtier (201, 202) à diamètre intérieur étagé formant un épaulement annulaire radial (203) à la jonction des segments de boîtier (201, 202) et la cartouche de soupape (11) est pressée contre l'épaulement annulaire (203) par un segment frontal annulaire avec interposition d'un joint d'étanchéité (22).

12. Soupape selon l'une des revendications 9 à 11,
**caractérisée en ce que**
la cartouche de soupape (11) est reçue au niveau de sa cage de soupape (17) par le segment (202) du boîtier de soupape (20) ayant le plus petit diamètre intérieur et
entre le corps de soupape (12) et la paroi du boîtier de soupape (11) on a un joint annulaire (25).

13. Soupape selon la revendication 7 et la revendication 11 ou 12,
**caractérisée en ce que**
la pression axiale d'application de la cartouche de soupape (11) est exercée par le boîtier de connexion (27) par l'intermédiaire des contre-contacts (29) et des contacts de raccordement (19).
